Europäisches Patentamt

(19) European Patent Office

Office européen des brevets

(11) Publication number: **0 203 233**
**B1**

(12) **EUROPEAN PATENT SPECIFICATION**

(45) Date of publication of patent specification: **11.04.90**

(51) Int. Cl.⁵: **B 29 C 47/88, B 29 C 41/26**

(21) Application number: **85303805.7**

(22) Date of filing: **30.05.85**

(54) Method and apparatus for the electrostatic pinning of polymeric webs.

(43) Date of publication of application:
03.12.86 Bulletin 86/49

(45) Publication of the grant of the patent:
11.04.90 Bulletin 90/15

(84) Designated Contracting States:
BE DE FR GB IT LU NL

(56) References cited:
GB-A-2 013 133
US-A-3 223 757
US-A-3 655 307
US-A-3 820 929

(73) Proprietor: E.I. DU PONT DE NEMOURS AND
COMPANY
1007 Market Street
Wilmington Delaware 19898 (US)

(72) Inventor: Forrest, Albert White, Jr.
42 Cypress Road
Chillicothe Ohio 45601 (US)

(74) Representative: Jones, Alan John et al
CARPMAELS & RANSFORD 43 Bloomsbury
Square
London, WC1A 2RA (GB)

Courier Press, Leamington Spa, England.

## Description

### Background

This invention relates generally to the production of film and, more particularly, to the electrostatic pinning of a freshly cast web to the surface of a quenching drum.

In existing machines, film is produced by extruding a web of molten, polymeric, film-forming material onto a quenching drum and then advancing the quenched web through stretching and slitting stations to windups. The use of a charged electrode adjacent the freshly cast web for generating an electrostatic field which pins the web to the drum was disclosed by Owens et al. in US-A-3,223,757. In US-A-3,655,307, Hawkins disclosed the possibility of increasing the throughput of a casting machine by adding a grounded, insulated electrode and thereby increasing the pinning force. A modification of the two electrode system was proposed by Segransan et al. in US-A-4,244,894.

Segransan provides a device for electrostatically adhering a dielectric film to an electrically conducting surface, which surface is arranged for connection in operation to a fixed potential and is capable of moving while carrying the film, the device comprising a corona electrode consisting of a metal wire which is arranged substantially parallel to the said surface, means for feeding the corona electrode, in operation, with direct current, and a second electrically conducting electrode of hollow open curved cross-section arranged with its concave face facing, and its axis of curvature substantially parallel to, the corona electrode and the said surface, the second electrode being electrically uninsulated and being arranged for connection, in operation, to a potential which is lower in absolute value than that of the corona electrode, the relative positions of the corona electrode and the second electrode being such that an electric current is thereby established between the corona electrode and the second electrode in operation. The device may be used in the application of freshly cast thermoplastic material to a quenching drum. Film issuing from a die passes onto a grounded quenching drum beneath the electrode arrangement and is applied to the drum by the action of ions generated by the corona electrode. Attempts to increase the throughput with such systems have not been successful because of nonuniform pinning through the width of the web.

### Summary

With the ion discharge device disclosed herein, an enhanced, pinning force is achieved by the provision of spaced, conductive pins projecting from a secondary electrode toward a charged, primary electrode in the form of a fine wire. According to the method of the present invention, the current in the electric field between the primary and secondary electrodes is localized at spaced points along the lengths of the electrodes.

### Drawings

Fig. 1 is a perspective schematic showing the pinning device of the present invention in association with adjacent elements of a casting machine.

Figs. 2 and 3 are fragmentary, top and elevational views, respectively, of the pinning device shown in Fig. 1.

Fig. 4 is an end view of a modified pinning device.

### Description

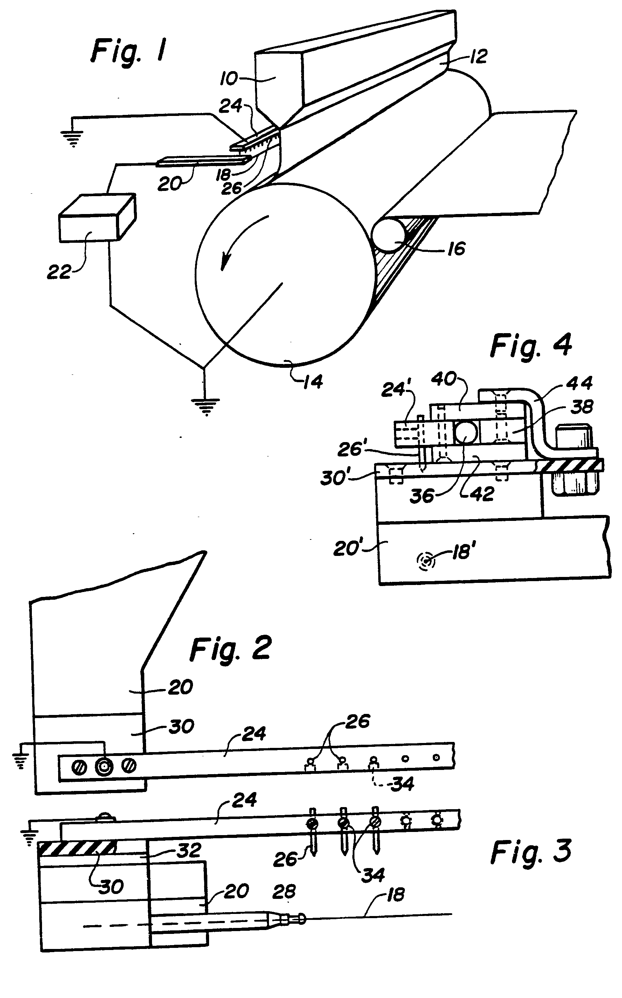

Referring to Fig. 1, the machine into which the pinning device of this invention has been incorporated includes a die 10 from which a web 12 of molten polymer is extruded and cast onto a grounded quenching drum 14. Web 12 is stripped from drum 14 and advanced over a roll 16 toward stretching stations from which the resulting thin film proceeds through a slitting station to windups.

Just above the line of first contact between web 12 and drum 14, an electrode 18 in the form of a conductive, fine wire is suspended between arms 20 which are located at each end of the drum beyond the edges of the web. Wire 18 is connected to a high voltage source 22 of direct current and functions as a primary electrode. A second, elongated, grounded electrode 24 in the form of a conductive bar is also positioned transversely of drum 14. Electrode 24 is located on the opposite side of electrode 18 from drum 14 and carries a plurality of equispaced, conductive pins 26, all of which are directed toward electrode 18.

As shown in Figs. 2 and 3, electrode 18 passes into arm 20 through a guide 28. Each end of the bar 24 is fastened to a mounting plate 30 of insulating material. Plate 30 is fastened to an intermediate, supporting plate 32 which, in turn is fastened to arm 20. Pins 26 pass through apertures in bar 24 and are held in place by set screws 34. Each pin 26 has a pointed end located adjacent the wire 18. The adjustments permitted by set screws 34 facilitate location of all pinpoints equidistant from wire 18.

In operation, the electric field around the charged electrode 18 ionizes the air. Ions of the same charge as the potential applied to electrode 18 are attracted to the grounded drum 14 and press or pin the web 12 to its surface. A secondary electric field is established between electrode 18 and the pointed pins 26. This secondary field produces a larger quantity of ions and thereby increases the pinning force on web 12.

The key feature of the ion discharge pinning device shown herein is the production of a stable current between the two electrodes which current is also uniform over the length of the charged wire 18. This is accomplished by the manner in which each pin focuses the electric field at its point, thereby insuring a localized flow of current through each pin. With a stable, uniform, secondary current, a larger quantity of ions is produced without detrimental arcing, and they are distributed uniformly across the width of web 12. These effects permit an effective increase in the rate at which molten polymer can be extruded from die 10.

In tests of an operable embodiment, the primary electrode 18 was charged positively and the device was used to pin both intermediate and heavy gage polyester webs. Pins 26 were tungsten and wire 18 was stainless steel. Pins 26 were 0.06 inch (0.15 cm) in diameter, 0.625 inch (1.56 cm) in length, and tapered in a 30° cone at their pointed ends. It was found that the key parameters are the diameters of the pinpoints and the fine wire 18. The most stable current flow was produced with pinpoint diameters of about 0.005 inch (0.13 mm) or less and a wire diameter of about 0.007 inch (0.18 mm). Other relationships can be adjusted to suit the operating conditions. Thus, the pin-to-wire spacing depends on the voltage applied to electrode 18 (5-15 kilovolts) and the ambient air temperature (212-392°F, 100-200°C). Higher temperatures and voltages require larger pin-to-wire spacing (0.4-1.2 inch, 1-3 cm). The preferred voltage and spacing are 10 kilovolts (kv) and one inch (2.5 cm). The tests indicated that a uniform pinning force is best achieved with a pin spacing of about one half of the pin-to-wire spacing.

In the embodiment shown in Fig. 4, a tubular heater 36 is located between bar 24' and a back bar 38. These three elements are sandwiched between upper and lower plates 40, 42 and the assembly is fastened to insulating plate 30' by a bracket 44. Plate 30' is fastened to arm 20'. Heating of the secondary electrode in this manner avoids condensation of volatile components from the freshly cast web 12 and, consequently, their deposition on the electrodes and pins.

When the pins are equispaced. as shown in Figs. 1-3, the secondary electric field is not only stable but also uniform. In some instances, it could be advantageous to apply more pinning force at specified locations. e.g., adjacent the edges of the web and this would be accomplished by reducing the spacing between the pins at those locations. In other instances. e.g., where existing equipment would foreclose placement of the secondary electrode 24 above the primary electrode, as shown in Fig. 1, it could be placed alongside or even at a level below the primary electrode. Similarly, it is not a requisite that the pins 26 be pointed directly at electrode 18, as long as no other part of the secondary electrode is as close to the primary electrode as the pinpoints. These and other modifications will occur to those skilled in the art without departing from the spirit of the invention which. accordingly, is intended to be limited only by the scope of the appended claims.

## Claims

1. An ion discharge device for pinning a freshly cast, polymeric web (12) to a grounded quenching drum (14), said device comprising first (18) and second (24) electrodes, the first electrode (18) being a charged, fine wire, the second electrode (24) being a grounded bar having a plurality of spaced, conductive, pins (26) mounted thereon, said pins having points located adjacent said wire (18).

2. The device of claim 1 wherein the points are located equidistant from the wire (18).

3. The device of claim 1 or 2 wherein the bar (24) has apertures therethrough for the pins (26) and is provided with means (34) permitting adjustment of the pins (26) with respect to the bar (24) and the wire (18).

4. The device of claim 1, 2 or 3 wherein the pins (26) are equispaced.

5. A method for pinning a freshly cast, polymeric web (12) to a moving support (14), including the steps of advancing a freshly cast polymeric web (12) to a moving support (14) and establishing electric fields between first (18) and second (24) electrodes as well as between the first electrode (18) and the support (14), wherein the flow of current is localised between the two electrodes at spaced points along the length thereof.

6. The method of claim 5, wherein the moving support (14) is a grounded quenching drum.

7. The method of claim 6, wherein the first electrode (18) is a fine wire, the second electrode (24) is a grounded bar and the flow of current is localised at spaced points by means of a plurality of spaced, conductive, pins (26) mounted on the bar (24) and having points located adjacent the wire (18), the wire (18) having a charge applied thereto whereby the flow of current is established.

8. A method for producing polymeric film which comprises the method of any one of claims 5 to 7.

9. The use of the device of any one of claims 1 to 4 in the production of polymeric film.

## Patentansprüche

1. Ionenentladungsvorrichtung zum Anheften einer frisch geformten, polymeren Bahn (12) an eine geerdete Abschrecktrommel (14), wobei die Vorrichtung erste (18) und zweite (24) Elektroden aufweist, die erste Elektrode (18) ein geladener, feiner Draht ist, die zweite Elektrode (24) ein geerdetes Teil ist, das eine Mehrzahl von im Abstand angeordneten, leitenden Stiften (26) hat, die daran angebracht sind, und wobei die Stifte Spitzen haben, die sich in der Nähe des Drahts (18) befinden.

2. Vorrichtung nach Anspruch 1, bei der die Spitzen in gleichem Abstand von dem Draht (18) vorgesehen sind.

3. Vorrichtung nach Anspruch 1 oder 2, bei der das Teil (24) durch dasselbe gehende Öffnungen für die Stifte (26) hat, und mit einer Einrichtung (34) versehen ist, die eine Verstellung der Stifte (26) bezüglich des Teils (24) und des Drahts (18) gestattet.

4. Vorrichtung nach Anspruch 1, 2 oder 3, bei der die Stifte (26) in gleichen Abständen angeordnet sind.

5. Verfahren zum Anheften einer frisch geformten, polymeren Bahn (12) an einen sich bewegenden Träger (14), welches die Schritte umfasst, gemäss denen eine frisch geformte, polymere Bahn (12) zu einem sich bewegenden Träger (14) gefördert wird, und elektrische Felder zwischen den ersten (18) und den zweiten (24) Elektroden sowie zwischen der ersten Elektrode (18) und dem Träger (14) aufgebaut werden, wobei der Stromfluss örtlich zwischen den beiden Elektroden an im Abstand liegenden Stellen längs der Länge derselben lokalisiert ist.

6. Verfahren nach Anspruch 5, bei dem der sich bewegende Träger (14) eine geerdete Abschrecktrommel ist.

7. Verfahren nach Anspruch 6, bei dem die erste Elektrode (18) ein feiner Draht ist, die zweite Elektrode (24) ein geerdetes Teil ist, und der Stromfluss örtlich an im Abstand liegenden Spitzen mit Hilfe einer Mehrzahl von im Abstand angeordneten, leitenden Stiften (26), die an dem Teil (24) angebracht sind, lokalisiert ist, und Spitzen hat, die in der Nähe des Drahts (18) liegen. wobei an dem Draht (18) eine Ladung anliegt und hierdurch der Stromfluss bereitgestellt wird.

8. Verfahren zum Herstellen eines polymeren Films, das die Verfahrensweisen nach einem der Ansprüche 5 bis 7 aufweist.

9. Verwendung der Vorrichtung nach einem der Ansprüche 1 bis 4 zur Herstellung einer polymeren Folie.

**Revendications**

1. Un dispositif de décharge ionique pour plaquer une bande 12 en polymère fraîchement coulée contre un tambour de refroidissement (14) mis à la terre, ledit dispositif comportant une première électrode (18) et une deuxième électrode (24) la première électrode (18) étant constituée par un fil métallique fin chargé, la deuxième électrode (24) étant constituée par une barre mise à la terre et comportant une pluralité d'aiguilles conductrices (26) écartées les unes des autres et montées sur cette barre, lesdites aiguilles ayant des pointes situées au voisinage dudit fil métallique (18).

2. Le dispositif selon la revendication 1, dans lequel les pointes sont équidistantes du fil métallique (18).

3. Le dispositif selon la revendication 1 ou 2, dans lequel la barre (24) comporte des ouvertures où passent les aiguilles (26) et comprend des moyens (34) permettant le réglage des aiguilles (26) par rapport a la barre (24) et au fil métallique (18).

4. Le dispositif selon la revendication 1, 2 ou 3, dans lequel les aiguilles (26) sont équidistantes.

5. Un procédé pour plaquer une bande en polymère (12) fraîchement coulée à un support mobile (14), comportant les étapes qui consistent à faire avancer une bande en polymère (12) fraîchement coulée vers un support mobile (14) et à établir des champs électriques entre une première électrode (18) et une deuxième électrode (24) ainsi qu'entre la première électrode (18) et le support (14), suivant lequel la circulation du courant est localisée entre les deux électrodes en des points espacés le long de celles-ci.

6. Le procédé selon la revendication 5, suivant lequel le support mobile (14) est un tambour de refroidissement mis à la terre.

7. Le procédé selon la revendication 6, suivant lequel la première électrode (18) est un fil métallique fin, la deuxième électrode (24) est une barre mise à la terre et la circulation du courant est localisée en des points espacés les uns des autres au moyen d'une pluralité d'aiguilles (26) conductrices, espacées les unes des autres et montées sur la barre (24), ayant des pointes situées au voisinage du fil métallique (18), celui-ci étant chargé de manière à permettre l'établissement d'une circulation de courant.

8. Un procédé pour la production de film en polymère qui comporte le procédé selon l'une quelconque des revendications 5 à 7.

9. L'utilisation du dispositif de l'une quelconque des revendications 1 à 4 pour la production de film en polymere.

*Fig. 1*

*Fig. 4*

*Fig. 2*

*Fig. 3*